# EUROPEAN PATENT APPLICATION

(11) **EP 3 859 568 A1**
(43) Date of publication of application: **04.08.2021**
(21) Application number: 18935850.0
(22) Date of filing: 28.09.2018
(51) Int. Cl.: G06F 17/00, G01L 15/00

(54) **DIALOGUE DEVICE, DIALOGUE METHOD AND DIALOGUE PROGRAM**

(71) Applicant: FUJITSU LIMITED, Kanagawa 211-8588 (JP)
(72) Inventor: TAIRA, Kei, Kawasaki-shi, Kanagawa 211-8588 (JP); IMAI, Takashi, Kawasaki-shi, Kanagawa 211-8588 (JP); SAWASAKI, Naoyuki, Kawasaki-shi, Kanagawa 211-8588 (JP)
(74) Representative: Hoffmann Eitle
(86) International application number: PCT/JP2018/036581
(87) International publication number: WO 2020/066019

(57) **Abstract**

An interactive apparatus (10) estimates an interaction state based on content uttered from a user between the user and the interactive apparatus (10). The interactive apparatus (10) estimates an interaction state based on content uttered from a user between the user and the interactive apparatus (10). The interactive apparatus (10) acquires a strategy corresponding to the estimated interaction state, and selects, based on the acquired strategy, content of an utterance to be uttered by the interactive apparatus (10) in an interaction between the user and the interactive apparatus (10). The interactive apparatus (10) utters to the user with the selected content of an utterance.

## Description

### Technical Field

The embodiments discussed herein are related to an interactive apparatus, an interactive method, and an interactive program.

### Background Art

In the related art, an interactive system that interacts with a user using voice or text is known. Examples of the interactive system include a voice speaker, a communication robot, a chatbot, and the like. There has been proposed a technique for causing the interactive system to perform a natural interaction as that performed between humans.

For example, in a chat system in which a plurality of users participate, a technique for visualizing a result of estimating a conversation state based on an appearance state of a keyword is known. For example, a technique is known in which emotions of a speaker and a system are determined based on a text and a rhythm, and a response pattern of the system is selected based on the determination result. For example, a robot is known that recognizes a progress of a game based on keywords appearing in conversation between game participants and makes an utterance corresponding to the recognized progress.

### Citation List

### Patent Literature

PTL 1: Japanese Laid-open Patent Publication No. 2002-229919
PTL 2: Japanese Laid-open Patent Publication No. 2010-128281
PTL 3: Japanese Laid-open Patent Publication No. 2004-310034

### Summary of Invention

### Technical Problem

However, it may be difficult to improve continuity of an interaction with the technique described above. A chat between humans may continue for a long time due to natural transition from a topic in progress to another topic. In contrast, since the above-described interactive system does not have a function of changing a topic to a topic unrelated to the topic in progress, the user may get bored with the interaction and the interaction may not continue for a long time.

In one aspect, an object is to provide an interactive apparatus, an interactive method, and an interactive program that are capable of increasing continuity of an interaction.

### Solution to Problem

In one aspect, the interactive apparatus estimates an interaction state based on content uttered from a user between the user and the interactive apparatus. The interactive apparatus acquires a strategy corresponding to the estimated interaction state, and selects, based on the acquired strategy, content of an utterance to be uttered by the interactive apparatus in an interaction between the user and the interactive apparatus. The interactive apparatus utters to the user with the selected content of an utterance.

### Advantageous Effects of Invention

According to an aspect, continuity of an interaction may be improved.

### Brief Description of Drawings

[FIG. 1] FIG. 1 is a functional block diagram illustrating a functional configuration of an interactive apparatus according to a first embodiment.
[FIG. 2] FIG. 2 is a diagram illustrating an example of interaction blocks stored in an interaction block DB.
[FIG. 3] FIG. 3 is a diagram for explaining a change of an interaction state.
[FIG. 4] FIG. 4 is a diagram describing block selection processing.
[FIG. 5] FIG. 5 is a flowchart illustrating a flow of processing in response to an utterance of a user.
[FIG. 6] FIG. 6 is a flowchart illustrating a flow of processing in response to a reaction of a user.
[FIG. 7] FIG. 7 is a flowchart illustrating a flow of keyword addition processing.
[FIG. 8] FIG. 8 is a flowchart illustrating a flow of output processing of an utterance.
[FIG. 9] FIG. 9 is a flowchart illustrating a flow of interaction state estimation processing.
[FIG. 10] FIG. 10 is a diagram illustrating an example of a hardware configuration.

### Description of Embodiments

Hereinafter, embodiments of an interactive apparatus, an interactive method, and an interactive program according to the present invention will be described in detail with reference to the drawings. The embodiments do not limit the present disclosure. The embodiments may be combined with each other as appropriate within a scope where there is no contradiction.

### EMBODIMENT 1

The interactive apparatus according to the first embodiment receives input of voice, text, or the like from a user. The interactive apparatus generates an utterance in response to the input and outputs the generated utterance to the user by voice, text, or the like. Thus, the interactive apparatus interacts with the user.

The interactive apparatus may select, in consideration of a situation of an interaction with the user, whether to continue a topic in progress or suggest a new topic. Thus, the interactive apparatus suppresses that the user gets bored with the interaction, and achieves that the interaction continues for a long time. For example, the interactive apparatus may be a voice speaker, a communication robot, a chatbot, a service robot, or the like.

### [Functional Configuration]

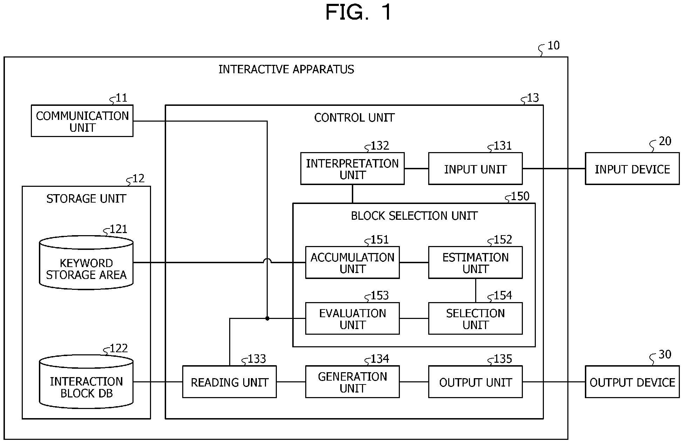

FIG. 1 is a functional block diagram illustrating a functional configuration of the interactive apparatus according to the first embodiment. As illustrated in FIG. 1, an interactive apparatus 10 includes a communication unit 11, a storage unit 12, and a control unit 13. The interactive apparatus 10 is coupled to an input device 20 and an output device 30.

The input device 20 is a device for a user to input information such as voice or text. For example, the input device 20 is a microphone, a keyboard, a touch panel display, or the like. The input device 20 may include a sensor for acquiring information on the user. For example, the input device 20 may include a camera, a thermometer, an acceleration sensor, and the like.

The output device 30 is a device for outputting an utterance to the user. The output device 30 may output an utterance by voice or by text. For example, the output device 30 is a speaker, a display, or the like.

The communication unit 11 is an interface for performing data communication with other apparatuses. For example, the communication unit 11 is a network interface card (NIC), and performs data communication via the Internet.

The storage unit 12 is an example of a storage device which stores data, a program to be executed by the control unit 13, and the like, and is, for example, a hard disk, a memory, or the like. The storage unit 12 includes a keyword storage area 121 and an interaction block DB 122.

The keyword storage area 121 is an example of a storage area that stores keywords. Each processing unit of the interactive apparatus 10 adds a keyword to the keyword storage area 121, refers to a keyword stored in the keyword storage area 121, and deletes a keyword stored in the keyword storage area 121. For example, the keyword storage area 121 may store a character string in which keywords are separated by a predetermined symbol or may store an array having keywords as elements.

The interaction block DB 122 stores interaction blocks that are pieces of information in which the content of an utterance is defined in advance. The interaction blocks stored in the interaction block DB 122 may be generated based on content automatically collected from information and communication technology (ICT) services such as web sites. The interactive apparatus 10 may select any of the interaction blocks stored in the interaction block DB 122 and output an utterance generated based on the selected interaction block.

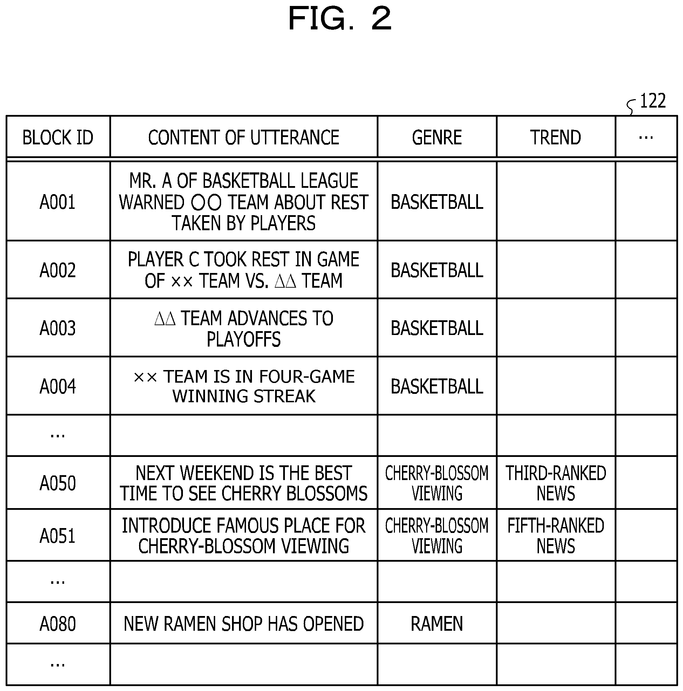

FIG. 2 is a diagram illustrating an example of interaction blocks stored in the interaction block DB. Each record in the table in FIG. 2 is an interaction block. As illustrated in FIG. 2, an interaction block includes items such as "block ID", "content of utterance", "genre", and "trend".

"Block ID" is an ID for identifying an interaction block. "Content of utterance" is a generated utterance itself or a piece of information used to generate an utterance. "Genre" is a genre into which an interaction block is classified. "Trend" is a situation of popularity of content referred to when an interaction block is generated.

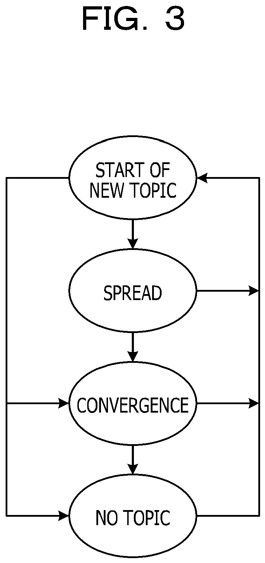

In the example of FIG. 2, it is indicated that the content of an utterance of an interaction block having a block ID of "A001" is "Mr. A of the basketball league warned ...", and the genre is "basketball". In the example of FIG. 3, it is indicated that the content of an utterance of an interaction block having a block ID of "A050" is "Next weekend is the best time to see cherry blossoms", the genre is "Cherry-blossom viewing", and the content that is the basis is news for which the number of views is ranked third.

Items of an interaction block are not limited to those illustrated in FIG. 2. For example, an interaction block may include information indicating a service for providing content referred to when the interaction block is generated, a condition for using the interaction block to generate an utterance, and the like.

The control unit 13 is a processing unit that controls the entire processing of the interactive apparatus 10, and is, for example, a processor or the like. The control unit 13 includes an input unit 131, an interpretation unit 132, a reading unit 133, a generation unit 134, an output unit 135, and a block selection unit 150.

The input unit 131 receives input of an utterance of a user via the input device 20. Utterances input to the input unit 131 include a reaction of the user to an utterance output to the user.

The interpretation unit 132 interprets an utterance input to the input unit 131. For example, the interpretation unit 132 analyzes an utterance input as a voice by using a known voice recognition technique. The interpretation unit 132 may perform morphological analysis on the text to extract keywords and interpret the meaning.

The interpretation unit 132 determines whether a reaction of the user is a positive one or a negative one. For example, the interpretation unit 132 determines whether a reaction of the user is a positive one or a negative one.

For example, the interpretation unit 132 determines that a reaction of the user is a positive one when the reaction includes words having a meaning of agreement, such as "yes" and "that is good". For example, the interpretation unit 132 determines that a reaction of the user is a negative one when the reaction includes words having an opposite meaning, such as "no" and "have no interest", or when the reaction of the user is only giving a simple response.

The interpretation unit 132 may determine whether a reaction of the user is a positive one or a negative one from information acquired by the sensor included in the input device 20. For example, the interpretation unit 132 may determine whether the user has made a positive reaction based on the expression of the user's face captured by a camera or the user's tone of voice collected by a microphone.

The reading unit 133 reads an interaction block from the interaction block DB 122. The reading unit 133 passes the read interaction block to the block selection unit 150 or the generation unit 134. The reading unit 133 may read an interaction block that meets a condition specified by the block selection unit 150.

The block selection unit 150 acquires a strategy corresponding to an estimated interaction state, and selects, based on the acquired strategy, content of an utterance to be uttered by the interactive apparatus in an interaction between the user and the interactive apparatus. The block selection unit 150 is an example of a selection unit.

The block selection unit 150 selects an interaction block from the interaction block DB 122. The block selection unit 150 may specify a condition for identifying an interaction block to be selected to the reading unit 133. A procedure for selecting an interaction block by the block selection unit 150 will be described later.

The generation unit 134 generates an utterance from the interaction block selected by the block selection unit 150. The utterance generated by the generation unit 134 is a sentence interpretable by the user. In a case where a sentence for utterance is included in the selected interaction block, the generation unit 134 may use the sentence as an utterance as it is.

The output unit 135 outputs the utterance generated by the generation unit 134 to the user via the output device 30. At this time, the output unit 135 may output the utterance as voice or as text. The generation unit 134 and the output unit 135 are examples of an utterance unit. For example, the generation unit 134 and the output unit 135 utter to the user with the content of an utterance selected by the block selection unit 150.

Interaction block selection processing by the block selection unit 150 will be described. As illustrated in FIG. 1, the block selection unit 150 includes an accumulation unit 151, an estimation unit 152, an evaluation unit 153, and a selection unit 154.

The accumulation unit 151 performs keyword addition processing based on the utterance interpreted by the interpretation unit 132. The accumulation unit 151 accumulates, in the keyword storage area 121, keywords that have appeared in an interaction between a user and the interactive apparatus 10 and that have not been accumulated in the keyword storage area 121. For example, the accumulation unit 151 does not add accumulated keywords to the keyword storage area 121.

The accumulation unit 151 accumulates, in the keyword storage area 121, keywords included in utterances to which the user has made a positive reaction among utterances made from the interactive apparatus 10 to the user. On the other hand, the accumulation unit 151 does not add, to the keyword storage area 121, keywords included in utterances to which the user has made a negative reaction among utterances made from the interactive apparatus 10 to the user.

When a keyword to be added to the keyword storage area 121 is not similar to an accumulated group of keywords, the accumulation unit 151 deletes the accumulated group of keywords and then adds the keyword.

The estimation unit 152 estimates an interaction state based on content uttered from a user between the user and the interactive apparatus 10. The estimation unit 152 estimates an interaction state based on whether a keyword is newly added to the keyword storage area 121 and whether the added keyword is similar to keywords that have been accumulated in the keyword storage area 121.

The estimation unit 152 estimates which of "start of new topic", "spread", "convergence", and "no topic" the interaction state is. "Start of new topic" is a state in which an interaction related to a new topic is started. "Spread" is a state in which an interaction related to an existing topic is continuing further and the conversation is spreading. "Convergence" is a state in which an interaction related to an existing topic is continuing further and the conversation is not spreading. "No topic" is a state in which there is no topic for which an interaction is in progress.

A set of one utterance by the interactive apparatus 10 and one utterance by the user is defined as one back-and-forth interaction. For example, every time one back-and-forth interaction is performed, a change of an interaction state occurs. The change of an interaction state is represented as in FIG. 3. FIG. 3 is a diagram for explaining the change of an interaction state.

As illustrated in FIG. 3, "start of new topic" changes to any state of "spread", "convergence", and "no topic". "Spread" changes to any state of "convergence" and "start of new topic". "Spread" changes to any state of "convergence" and "start of new topic". In some cases, each interaction state does not change and remains the same state.

The estimation unit 152 estimates an interaction state based on details of the keyword addition processing by the accumulation unit 151. When a keyword dissimilar to the accumulated keywords is added, the estimation unit 152 estimates that the interaction state is "start of new topic". When a keyword similar to the accumulated keywords is added, the estimation unit 152 estimates that the interaction state is "spread". When no keyword is added, the estimation unit 152 estimates that the interaction state is "convergence". When an interaction is interrupted, the estimation unit 152 estimates that the interaction state is "no topic".

For example, first, when an accumulated group of keywords is deleted by the accumulation unit 151, the estimation unit 1152 estimates that the interaction state is "start of new topic". Next, when the accumulation unit 151 does not delete the accumulated group of keywords and adds a keyword, the estimation unit 1152 estimates that the interaction state is "spread". When the accumulation unit 151 neither deletes the accumulated group of keywords nor adds a keyword, the estimation unit 1152 estimates that the interaction state is "convergence". However, when estimating that the interaction state is "convergence" continuously a predetermined number of times, the estimation unit 152 estimates that the interaction state is "no topic".

The selection unit 154 selects, based on the interaction state, whether to continue an existing topic or suggest a new topic in an interaction with the user. When the interaction state estimated by the estimation unit 152 is any of "start of new topic" and "spread", the selection unit 154 selects to continue the existing topic. On the other hand, when the interaction state estimated by the estimation unit 152 is any of "convergence" or "no topic", the selection unit 154 selects to suggest a new topic.

When selecting to continue the existing topic, the selection unit 154 selects a topic continuation strategy. When selecting to suggest a new topic, a topic suggestion strategy is selected. A strategy is a policy for selecting an interaction block. A predetermined logic is set for each strategy.

Based on the acquired strategy, the evaluation unit 153 evaluates an interaction block that is information in which the content of an utterance is defined in advance. The evaluation unit 153 performs evaluation in accordance with the strategy selected by the selection unit 154. The generation unit 134 generates an utterance to be output to the user from an interaction block selected based on the evaluation by the evaluation unit 153.

For example, as topic continuation strategies, there are "keyword matching", "related-word search", "second word search", and "user dictionary". "Keyword matching" is a strategy for highly evaluating an interaction block that includes a word matching an accumulated keyword. "Related-word search" is a strategy for highly evaluating an interaction block that includes a keyword that is simultaneously referred to with an accumulated keyword in a dictionary providing service such as Wikipedia. "Second word search" is a strategy for highly evaluating an interaction block that includes a keyword to be searched simultaneously when an accumulated keyword is input to a search engine. "User dictionary" is a strategy for highly evaluating an interaction block that includes a keyword highly related to accumulated keywords based on a dictionary of inter-keyword directivity created in advance for each user.

For example, as topic suggestion strategies, there are "user preference" and "trend". "User preference" is a strategy for evaluating an interaction block based on a user's preference set in advance. "Trend" is a strategy for highly evaluating an interaction block that includes a search word popular in a social networking service (SNS), a search site, or the like. As described above, both of the topic suggestion strategies are strategies for evaluating an interaction block regardless of accumulated keywords.

As illustrated in FIG. 2, a genre may be set in advance in the interaction block DB 122, and an interaction block of the same genre may be highly evaluated in the topic continuation strategy. Ranking of the trend may be set in advance in the interaction block DB 122, and the higher the ranking, the higher the evaluation of the interaction block.

When each of the topic continuation strategy and the topic suggestion strategy includes a plurality of strategies, the selection unit 154 may randomly select a strategy or may select a strategy based on a result of learning a user's preference.

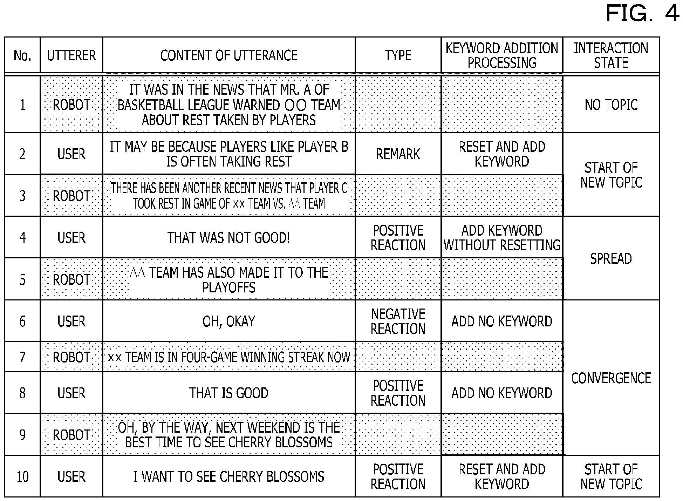

With reference to FIG. 4, selection processing of an interaction block by the estimation unit 152 will be specifically described. FIG. 4 is a diagram describing block selection processing. In the example of FIG. 4, the interactive apparatus 10 is referred to as a robot. "Content of utterance" is the content of an utterance input to the interactive apparatus 10 and an utterance output by the interactive apparatus 10.

"Type" is a result of interpretation by the interpretation unit 132. First, the interpretation unit 132 determines whether an utterance of a user corresponds to any of "positive reaction" and "negative reaction", and interprets an interaction that does not correspond to any of "positive reaction" and "negative reaction" as "remark".

"Keyword addition processing" is details of the keyword addition processing by the accumulation unit 151. "Keyword addition processing" is determined based on whether a keyword is added and whether an accumulated group of keywords is deleted. Reset is deletion of an accumulated group of keywords.

As illustrated in the interaction of No. 1 and No. 2 in FIG. 4, first, the interactive apparatus 10 output an utterance "It was in the news that Mr. A of the basketball league warned ○○ team about rest taken by players". In response to this, the user input an utterance "It may be because players like player B is often taking a rest".

The interpretation unit 132 interpreted the utterance of the user as a "remark". At this time, the accumulation unit 151 reset the keyword storage area 121 and added keywords. In this case, the estimation unit 152 estimates that the interaction state is "addition of new topic". From the interaction of No. 1 and No. 2 in FIG. 4, the accumulation unit 151 adds "basketball league", "Mr. A", "○○ Team", and "player B" as keywords.

Since the state estimated by the estimation unit 152 is "addition of new topic", the selection unit 154 selects a topic continuation strategy. At this time, as illustrated in No. 3 in FIG. 4, the interactive apparatus 10 outputs an utterance generated from an interaction block with the topic of basketball.

Subsequently, as illustrated in the interaction of No. 3 and No. 4 in FIG. 4, the interactive apparatus 10 output an utterance "There has been another recent news that player C took a rest in the game of × × team vs. ΔΔ team". In response to this, the user input an utterance "That was not good!".

The interpretation unit 132 interpreted the utterance of the user as a "positive reaction". At this time, the accumulation unit 151 added keywords without resetting the keyword storage area 121. In this case, the estimation unit 152 estimates that the interaction state is "spread". From the interaction of No. 3 and No. 4 in FIG. 4, the accumulation unit 151 adds "×× team", "ΔΔ team", and "player C" as keywords.

Since the state estimated by the estimation unit 152 is "spread", the selection unit 154 selects a topic continuation strategy. At this time, as illustrated in No. 5 in FIG. 4, the interactive apparatus 10 outputs an utterance generated from an interaction block related to the topic of basketball.

As illustrated in the interaction of No. 5 and No. 6 in FIG. 4, the interactive apparatus 10 output an utterance "ΔΔ team has also made it to the playoffs". In response to this, the user input an utterance "Oh, okay".

The interpretation unit 132 interpreted the utterance of the user as a "negative reaction". At this time, the accumulation unit 151 did not add keywords to the keyword storage area 121. In this case, the estimation unit 152 estimates that the interaction state is "convergence". The estimation unit 152 determines that the interaction state is "convergence" also for the interaction of No. 5 and No. 6 in FIG. 4.

Since the state estimated by the estimation unit 152 is continuously "convergence", the selection unit 154 selects a topic suggestion strategy. At this time, as illustrated in No. 9 in FIG. 4, the interactive apparatus 10 discontinues the topic of basketball and outputs an utterance generated from an interaction block related to cherry-blossom viewing.

### [Flow of Processing]

### (Flow of Processing in Response to Utterance of User)

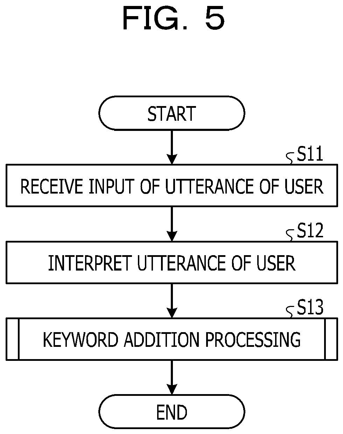

With reference to FIG. 5, a flow of processing of the interactive apparatus 10 in response to an utterance of a user will be described. FIG. 5 is a flowchart illustrating a flow of processing in response to an utterance of a user. As illustrated in FIG. 5, first, the interactive apparatus 10 receives input of an utterance of a user (step S11). Next, the interactive apparatus 10 interprets the content of the input utterance of the user (step S12). The interactive apparatus 10 executes keyword addition processing (step S13).

### (Flow of Processing in Response to Reaction of User)

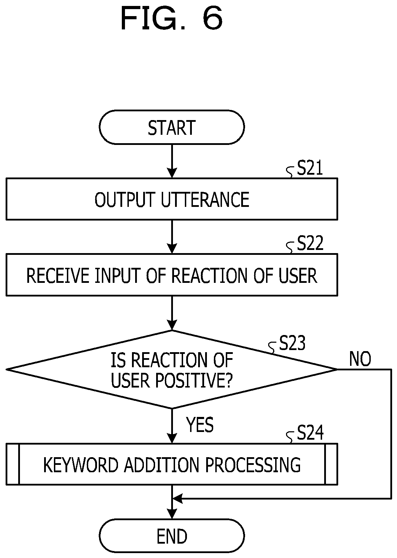

With reference to FIG. 6, a flow of processing of the interactive apparatus 10 in response to a reaction of a user will be described. FIG. 6 is a flowchart illustrating a flow of processing in response to a reaction of a user. As illustrated in FIG. 6, first, the interactive apparatus 10 outputs an utterance to a user (step S21). Next, the interactive apparatus 10 receives input of a reaction of the user (step S22). The interactive apparatus 10 determines whether the reaction of the user is positive (step S23).

When determining that the reaction of the user is not positive (step S23, No), the interactive apparatus 10 ends the processing without executing keyword addition processing. On the other hand, when determining that the reaction of the user is positive (step S23, Yes), the interactive apparatus 10 executes keyword addition processing (step S24).

### (Flow of Keyword Addition Processing)

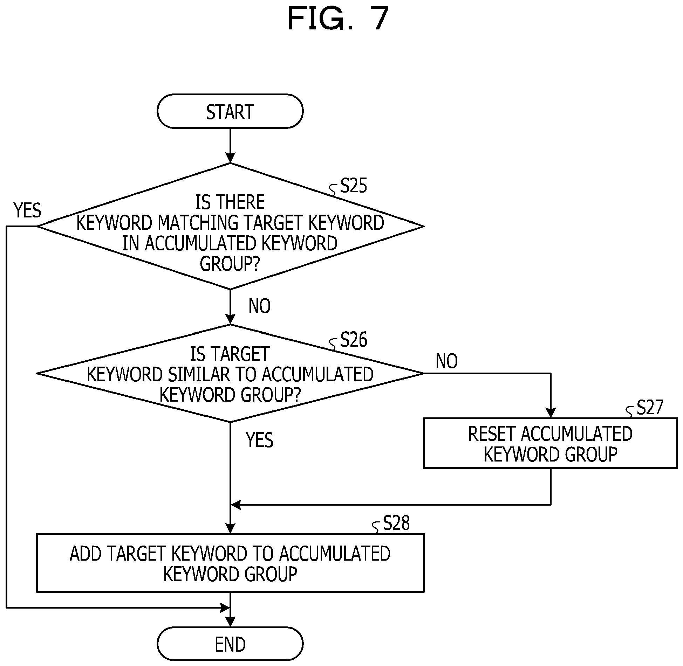

With reference to FIG. 7, a flow of keyword addition processing will be described. FIG. 7 is a flowchart illustrating a flow of keyword addition processing. The keyword addition processing is processing corresponding to step S13 in FIG. 5 and step S24 in FIG. 6.

As illustrated in FIG. 7, first, the interactive apparatus 10 determines whether a keyword matching a target keyword exists in an accumulated keyword group (step S25). The target keyword is a keyword included in an interaction. The accumulated keyword group is a set of keywords stored in the keyword storage area 121.

When determining that the keyword matching the target keyword exists in the accumulated keyword group (step S25, Yes), the interactive apparatus 10 ends the processing without adding the keyword. On the other hand, when determining that the keyword matching the target keyword does not exist in the accumulated keyword group (step S25, No), the interactive apparatus 10 determines whether the target keyword is similar to the accumulated keyword group (step S26).

When determining that the target keyword is similar to the accumulated keyword group (step S26, Yes), the interactive apparatus 10 adds the target keyword to the accumulated keyword group (step S28). On the other hand, when determining that the target keyword is not similar to the accumulated keyword group (step S26, No), the interactive apparatus 10 resets the accumulated keyword group (step S27) and adds the target keyword to the accumulated keyword group (step S28).

### (Flow of Output Processing of Utterance)

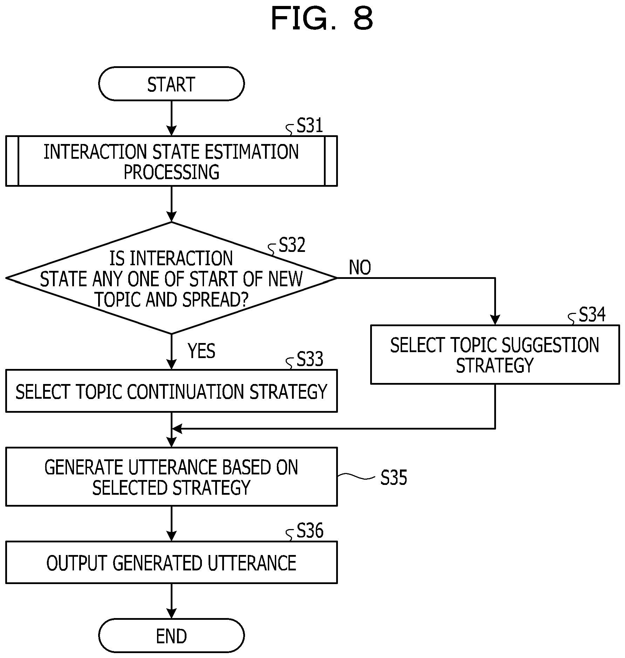

With reference to FIG. 8, a flow of output processing of an utterance will be described. FIG. 8 is a flowchart illustrating a flow of output processing of an utterance. As illustrated in FIG. 8, first, interaction state estimation processing is executed (step S31). Next, the interactive apparatus 10 determines whether an interaction state is any one of "start of new topic" and "spread", or is neither "start of new topic" nor "spread" (step S32).

When determining that the interaction state is any one of "start of new topic" and "spread" (step S32, Yes), the interactive apparatus 10 selects a topic continuation strategy (step S33). On the other hand, when determining that the interaction state is neither "start of new topic" nor "spread" (step S32, No), the interactive apparatus 10 selects a topic suggestion strategy (step S34).

The interactive apparatus 10 generates an utterance based on the selected strategy (step S35). The interactive apparatus 10 outputs the generated utterance to a user (step S36).

### (Flow of Interaction State Estimation Processing)

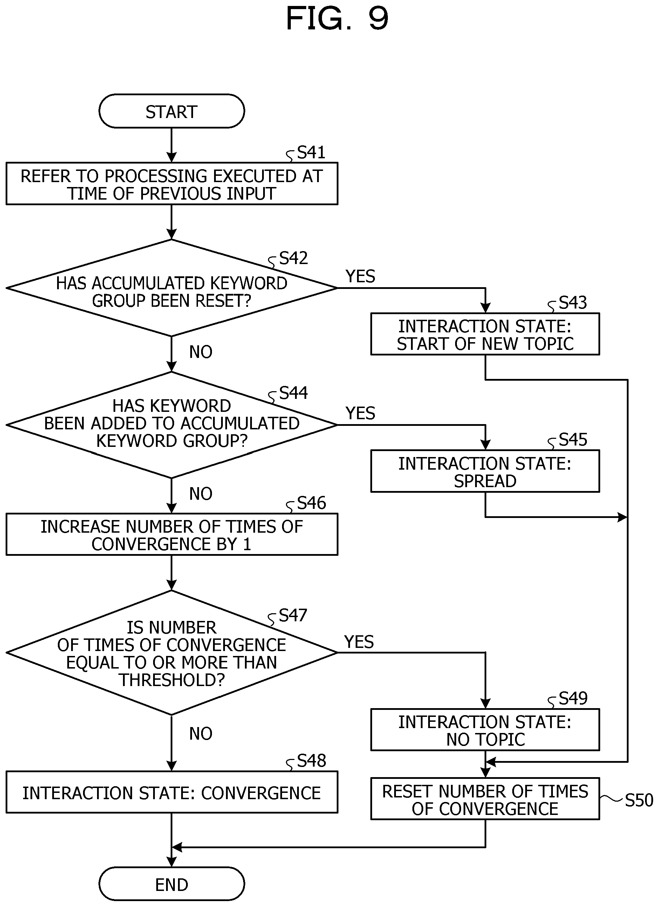

With reference to FIG. 9, a flow of interaction state estimation processing will be described. FIG. 9 is a flowchart illustrating a flow of interaction state estimation processing. The interaction state estimation processing corresponds to step S31 in FIG. 8.

As illustrated in FIG. 9, the interactive apparatus 10 refers to processing executed at the time of previous input (step S41). For example, the interactive apparatus 10 refers to whether keyword addition processing has been executed and processing details of the keyword addition processing.

The interactive apparatus 10 determines whether the accumulated keyword group has been reset (step S42). When determining that the accumulated keyword group has been reset (step S42, Yes), the interactive apparatus 10 sets the interaction state to "start of new topic" (step S43), resets the number of times of convergence (step S50), and ends the processing. The number of times of convergence is a variable used in subsequent processing and has an initial value of 0.

On the other hand, when determining that the accumulated keyword group has not been reset (step S42, No), the interactive apparatus 10 determines whether a keyword has been added to the accumulated keyword group (step S44). When determining that a keyword has been added to the accumulated keyword group (step S44, Yes), the interactive apparatus 10 sets the interaction state to "spread" (step S45), resets the number of times of convergence (step S50), and ends the processing.

On the other hand, when determining that no keyword has been added to the accumulated keyword group (step S44, No), the interactive apparatus 10 increases the number of times of convergence by 1 (step S46) and determines whether the number of times of convergence is equal to or more than a threshold (step S47). Here, the interactive apparatus 10 determines whether the interaction state is continuously estimated to be "convergence".

When determining that the number of times of convergence is equal to or more than a threshold (step S47, Yes), the interactive apparatus 10 sets the interaction state to "no topic" (step S49), resets the number of times of convergence (step S50), and ends the processing. On the other hand, when determining that the number of times of convergence is not equal to or more than a threshold (step S47, No), the interactive apparatus 10 sets the interaction state to "convergence" (step S48) and ends the processing.

### [Effect]

As described above, the interactive apparatus 10 estimates an interaction state based on content uttered from a user between the user and the interactive apparatus 10. The interactive apparatus 10 estimates an interaction state based on content uttered from a user between the user and the interactive apparatus 10. The interactive apparatus 10 acquires a strategy corresponding to the estimated interaction state, and selects, based on the acquired strategy, content of an utterance to be uttered by the interactive apparatus 10 in an interaction between the user and the interactive apparatus 10. The interactive apparatus 10 utters to the user with the selected content of an utterance. In this way, the interactive apparatus 10 changes a topic in accordance with an interaction state so that the user does not get bored with the interaction. Therefore, according to the interactive apparatus 10, continuity of an interaction may be improved.

The interactive apparatus 10 accumulates, in the keyword storage area 121, keywords that have appeared in an interaction between the user and the interactive apparatus 10 and that have not been accumulated in the keyword storage area 121. The interactive apparatus 10 estimates an interaction state based on whether a keyword is newly added to the keyword storage area 121 and whether the added keyword is similar to keywords that have been accumulated in the keyword storage area 121. In this way, the interactive apparatus 10 determines, based on the identity and similarity to accumulated keywords, whether to add a new keyword. Thus, by referring to accumulated keywords, it becomes possible to continue a topic.

When a keyword dissimilar to the accumulated keywords is added, the interactive apparatus 10 estimates that the interaction state is "start of new topic". When a keyword similar to the accumulated keywords is added, the interactive apparatus 10 estimates that the interaction state is "spread". When no keyword is added, the interactive apparatus 10 estimates that the interaction state is "convergence". When an interaction is interrupted, the interactive apparatus 10 estimates that the interaction state is "no topic". Thus, the interactive apparatus 10 may automatically estimate an interaction state based on an addition status of keywords.

The interactive apparatus 10 accumulates, in the keyword storage area 121, keywords included in utterances to which the user has made a positive reaction among utterances made from the interactive apparatus 10 to the user. Thus, the interactive apparatus 10 may recognize the user's interest and perform an interaction matching the user's interest.

The interactive apparatus 10 evaluates, based on a result of selecting a strategy, each interaction block that is information in which content of an utterance is defined in advance. The interactive apparatus 10 generates an utterance to be output to the user from an interaction block selected based on the evaluation. Thus, by preparing various strategies in advance, it becomes possible to flexibly select an interaction block.

In the above-described embodiment, there are four types of interaction states, "start of new topic", "spread", "convergence", and "no topic". However, the interaction states may not be four types. For example, in addition to the above-described interaction states, there may be "conversion" or the like that is an interaction state in which a user has suggested conversion of a topic.

### [System]

Processing procedures, control procedures, specific names, and information containing various kinds of data and parameters indicated in the specification and the drawings may be changed arbitrarily unless otherwise specified. The specific examples, distributions, numerical values, and the like described in the embodiment are merely examples, and may be changed arbitrarily.

Each constituent element of each apparatus illustrated in the drawings is a functional conceptual one and does not necessarily have to be physically configured as illustrated in the drawings. For example, specific forms of separation and integration of each apparatus are not limited to those illustrated in the drawings. For example, all or some of the apparatuses may be configured to be separated or integrated functionally or physically in any unit based on various loads, usage statuses, and the like. All or any part of each processing function performed by each apparatus may be implemented by a central processing unit (CPU) and a program analyzed and executed by the CPU, or may be implemented as hardware by wired logic.

### [Hardware]

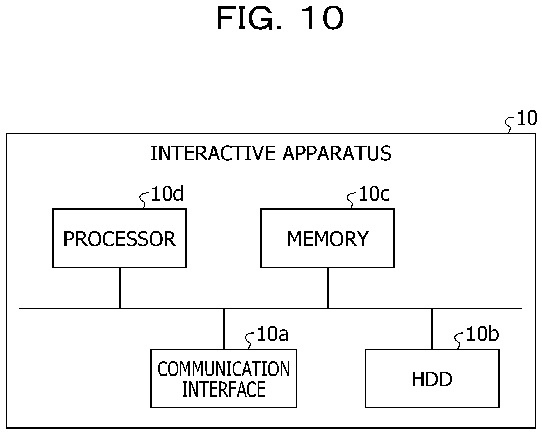

FIG. 10 is a diagram illustrating an example of a hardware configuration. As illustrated in FIG. 10, the interactive apparatus 10 includes a communication device 10a, a hard disk drive (HDD) 10b, a memory 10c, and a processor 10d. The devices illustrated in FIG. 10 are coupled to each other via a bus or the like.

The communication device 10a is a network interface card or the like, and communicates with another server. The HDD 10b stores a program and a database (DB) for operating the functions illustrated in FIG. 1.

The processor 10d operates a process of executing each function described in FIG. 2 and the like by reading, from the HDD 10b or the like, a program for executing processing similar to that of each processing unit illustrated in FIG. 1 and loading the program into the memory 10c. For example, this process executes a function similar to that of each processing unit included in the interactive apparatus 10. For example, the processor 10d reads, from the HDD 10b or the like, a program having a function similar to those of the input unit 131, the interpretation unit 132, the reading unit 133, the generation unit 134, the output unit 135, and the block selection unit 150. The processor 10d executes a process of executing processing similar to processing of the input unit 131, the interpretation unit 132, the reading unit 133, the generation unit 134, the output unit 135, the block selection unit 150, and the like.

In this way, the interactive apparatus 10 operates as an information processing apparatus that executes a classification method by reading and executing a program. The interactive apparatus 10 may also implement functions similar to those of the embodiment described above by reading the program from a recording medium with a medium reading device and executing the read program. The program described in these other embodiments is not limited to being executed by the interactive apparatus 10. For example, the present invention may be similarly applied to a case where another computer or a server executes the program, or a case where the other computer and the server cooperate to execute the program.

This program may be distributed via a network such as the Internet. The program may be recorded on a computer-readable recording medium such as a hard disk, a flexible disk (FD), a compact disc read-only memory (CD-ROM), a magneto-optical disk (MO), or a digital versatile disc (DVD), and may be executed by being read from the recording medium by a computer.

### Reference Signs List

10 interactive apparatus
11 communication unit
12 storage unit
13 control unit
20 input device
30 output device
121 keyword storage area
122 interaction block DB
131 input unit
132 interpretation unit
133 reading unit
134 generation unit
135 output unit
150 block selection unit
151 accumulation unit
152 estimation unit
153 evaluation unit
154 selection unit

## Claims

1. An interactive apparatus comprising:
an estimation unit that estimates an interaction state based on content uttered from a user between a user and an interactive apparatus;
a selection unit that acquires a strategy corresponding to the estimated interaction state, and selects, based on an acquired strategy, content of an utterance to be uttered by an interactive apparatus in an interaction between the user and an interactive apparatus; and
an utterance unit that utters to a user with content of an utterance selected by the selection unit.

2. The interactive apparatus according to claim 1,
wherein an accumulation unit is further included that accumulates, in a storage area, keywords that have appeared in an interaction between the user and an interactive apparatus and that have not been accumulated in the storage area, and
wherein the estimation unit estimates the interaction state based on whether a keyword is newly added to the storage area and whether an added keyword is similar to keywords that have been accumulated in the storage area.

3. The interactive apparatus according to claim 2, wherein the estimation unit estimates that an interaction state is start of new topic when a keyword dissimilar to accumulated keywords is added, estimates that an interaction state is spread when a keyword similar to accumulated keywords is added, estimates that an interaction state is convergence when no keyword is added, and estimates that an interaction state is no topic when an interaction is interrupted.

4. The interactive apparatus according to claim 2, wherein the accumulation unit accumulates, in the storage area, keywords included in utterances to which the user has made a positive reaction among utterances made from the interactive apparatus to the user.

5. The interactive apparatus according to claim 1, wherein the selection unit further includes
an evaluation unit that evaluates, based on the acquired strategy, an interaction block that is information in which content of an utterance is defined in advance, and
a generation unit that generates an utterance to be output to the user from an interaction block selected based on evaluation by the evaluation unit.

6. An interactive method in which a computer executes processing, the processing comprising:
estimating an interaction state based on content uttered from a user between a user and an interactive apparatus;
acquiring a strategy corresponding to the estimated interaction state, and selecting, based on an acquired strategy, content of an utterance to be uttered by an interactive apparatus in an interaction between the user and an interactive apparatus; and
uttering to a user with selected content of an utterance.

7. An interactive program causing a computer to execute processing, the processing comprising:
estimating an interaction state based on content uttered from a user between a user and an interactive apparatus;
acquiring a strategy corresponding to the estimated interaction state, and selecting, based on an acquired strategy, content of an utterance to be uttered by an interactive apparatus in an interaction between the user and an interactive apparatus; and
uttering to a user with selected content of an utterance.
